Europäisches Patentamt

**European Patent Office**

**Office européen des brevets**

(11) Publication number: **0 235 890**
**A2**

## (12) EUROPEAN PATENT APPLICATION

(21) Application number: **87300418.8**

(51) Int. Cl.⁴: **B60Q 1/44**

(22) Date of filing: **19.01.87**

(30) Priority: **18.01.86 GB 8601227**
**07.04.86 GB 8608461**

(43) Date of publication of application:
**09.09.87 Bulletin 87/37**

(84) Designated Contracting States:
**AT BE CH DE ES FR GR IT LI LU NL SE**

(71) Applicant: **Marsden, Wayne Michael**
**22 Delph Mount**
**Great Harwood Lancashire(GB)**
Applicant: **Marsden, Warren Lee**
**38 St. Johns Street**
**Great Harwood Lancashire(GB)**

(72) Inventor: **Marsden, Wayne Michael**
**22 Delph Mount**
**Great Harwood Lancashire(GB)**
Inventor: **Marsden, Warren Lee**
**38 St. Johns Street**
**Great Harwood Lancashire(GB)**

(74) Representative: **Quest, Barry et al**
**M'CAW & CO. 41-51 Royal Exchange Cross**
**Street**
**Manchester M2 7BD(GB)**

(54) Speed reduction indicator.

(57) A speed reduction indicator (l0) is provided which will indicate that a vehicle is slowing down even though the brakes have not been applied. The indicator (l0) has two terminals (l9,20) which are connected to the switch contacts (l7,l8) of a brake pedal (l4) operated switching device, and to a battery (l3) and brake lights (l6). The terminals (l9,20) extend into a hollow body (2l) at opposed ends thereof, the body (2l) being mounted inclined upwardly towards the front of the vehicle and containing mercury (22). When the vehicle is stationary, moving at constant speed or accelerating the mercury (22) lies at the lower end of the body (2l), but when the vehicle is decelerating the mercury (22) surges forwardly in the body (2l) to contact both terminals - (l9,20) close the circuit therebetween and activate the brake lights (l6).

FIG. 1

## SPEED REDUCTION INDICATOR

This invention relates to a speed reduction indicator.

It is customary for motorised road vehicles to be fitted with what are referred to as "brake lights". These are high intensity rear lights which are activated when the brake pedal, or brake lever in the case of motor cycles, is operated, and serve to indicate to anyone following the vehicle that the brakes have been applied and the vehicle can be expected to slow down and possibly stop. However a vehicle may slow down on occasions other than when the brakes are applied. For example, simply by closing the throttle, by using a handbrake in the case of motor cars, lorries and the like, by changing to a lower gear, due to power loss by virtue of engine malfunction or lack of fuel, or even a change of gradient or headwind conditions. On such occasions there is no indication to a following vehicle that the vehicle it is following is slowing down other than a sudden reduction in the distance apart of the two vehicles. This may delay the realisation of the situation by the driver of the following vehicle so as to preclude him from being able to stop or slow down in time to prevent accidental collision between the vehicles.

It is an object of the present invention to provide a speed reduction indicator which will indicate to the driver of a following vehicle that a leading vehicle is slowing down, even if the leading vehicle is slowing down without the application of the brakes by which brake lights are conventionally operated.

The invention provides a speed reduction indicator for a vehicle comprising a pair of electrical terminals, said terminals being spaced apart and connected one to a source of electrical power and the other to an indicating means, and contact means freely movable between a non-operating position in which at least one of said terminals is not in contact with said contact means, and an operating position in which said contact means is in contact with both of said terminals.

The terminals may be disposed at opposed ends of a hollow body, in which case said contact means may comprise mercury contained in said body. Said body may be mounted in a vehicle so as to be inclined upwardly towards the front of said vehicle.

Alternatively said terminals may be disposed at opposed ends of a hollow body and said contact means may comprise a resiliently flexible strip disposed in said body, having one end thereof connected with one of said terminals and a free end, and a roller constrained to roll along said strip so that the weight of said roller when located at said free end causes said strip to bend and contact the other of said terminals. Said body may be mounted in a vehicle with said strip inclined upwardly towards the front of said vehicle.

Alternatively, said contact means may comprise an elongate member pivotally mounted in a body, said terminals being disposed on opposed sides of the pivot axis of said member and said member having a centre of mass spaced from said pivot axis to one of said sides thereof. Said body may be mounted in a vehicle with said pivot axis extending laterally thereof and said terminals disposed forwardly and rearwardly of said pivot axis and said centre of mass located rearwardly and upwardly of said pivot axis.

The invention will now be described with reference to the accompanying drawings, in which:-

Fig. 1 is a schematic illustration of one embodiment in a non-activated condition,

Fig. 2 is a schematic illustration of the embodiment of Fig. 1 in an activated condition,

Fig. 3 is a schematic illustration of a second embodiment in a non-activated condition.

Fig. 4 is a schematic illustration of the embodiment of Fig. 3 in an activated condition,

Fig. 5 is a schematic illustration of a third embodiment in a non-activated condition, and

Fig. 6 is a schematic illustration of the embodiment of Fig. 5 in an activated condition.

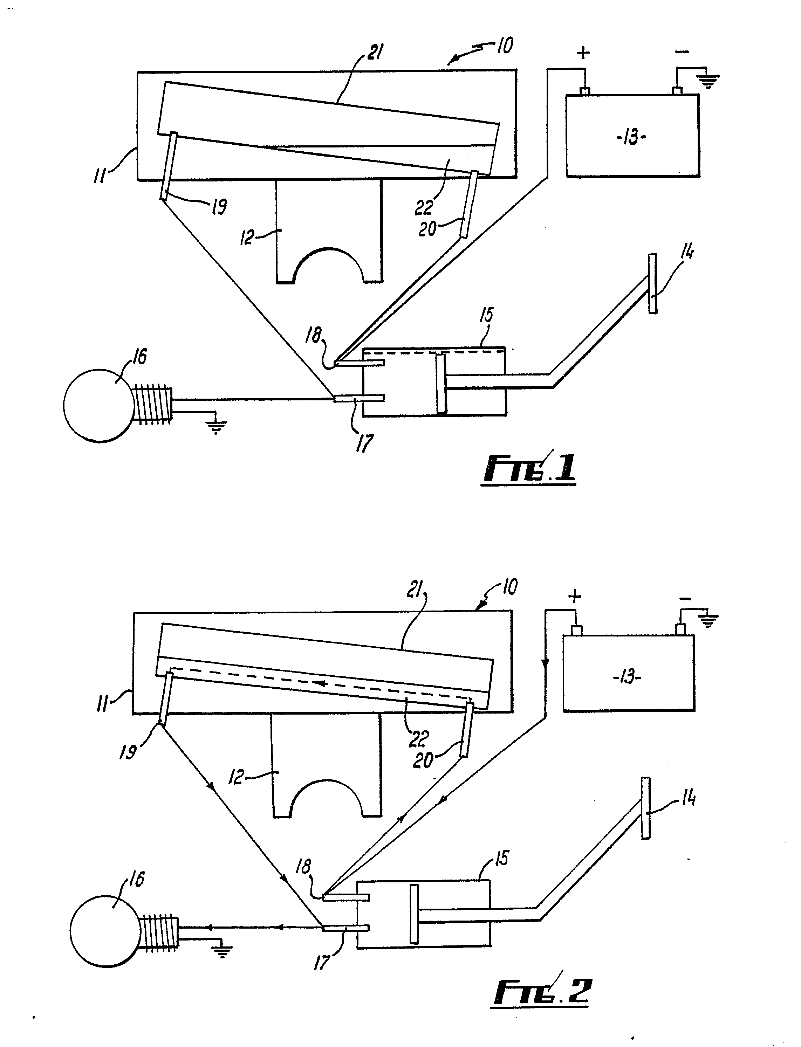

Referring now to Fig. 1 there is shown a speed reduction indicator 10 comprising a body 11 and a mounting plate 12 by means of which it may be mounted in a motor vehicle (not shown in detail). Also mounted in or considered as part of the motor vehicle are a battery 13, a brake pedal 14, a brake operating cylinder 15 and brake lights 16 (only one being shown as in the case of motor cycles but two are normally provided in the case of cars, vans, lorries and the like). Associated with the brake pedal 14 or brake cylinder 15 is a switching device (not shown in detail), which on operation of the brake pedal 14 causes an electrical circuit to be closed between switch contacts 17,18, and hence cause the brake lights 16 to be illuminated. The brake light operating apparatus described above is conventional. In addition to such apparatus there is the speed reduction indicator 10 which has two terminals 19,20, which are connected to contacts 17,18 respectively. Within the body 11 is mounted an unbreakable glass tube 21 containing a quantity of mercury 22. The tube 21, which may be of any other suitable material, is secured so as to be inclined relative to the body 11 at an angle greater than the vehicle inclination likely to be experienced by normal use of the vehicle. Alternatively the tube

21 could be mounted to be parallel with the longitudinal axis of the body II and the body II be mounted in the vehicle so as to be inclined relative to the longitudinal axis of the vehicle. With the tube 21 so inclined in the fore and aft direction of the vehicle the mercury 22 will rest at the lower end of the tube 21 when the vehicle is stationary, moving at constant speed or accelerating. In this position the mercury 22 will be in contact with one terminal 20, which extends into the tube 21, but will not be in contact with the other terminal 19 which also extends into the tube 21 at the opposite end thereof from that at which terminal 20 is located. As a consequence there will not be an electrical circuit formed between the terminals 19 and 20 and the brake lights 16 will not be activated in the absence of any actuation of the brake pedal 14.

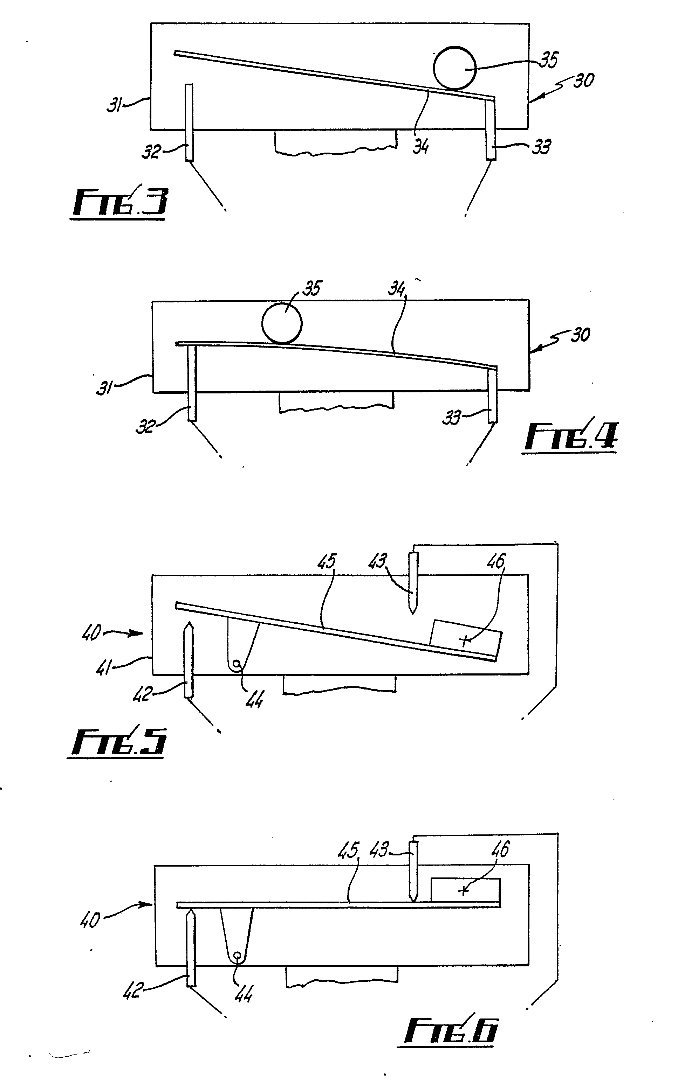

However if the vehicle slows down under any of the non-brake operated circumstances referred to earlier, the inertia force of the mercury 22 will cause it to surge forwardly in the tube 21 and come into contact with terminal 19. The situation will then be as shown in Fig. 2, in which situation the mercury 22 will be in contact with both terminals 19,20 and an electrical circuit will be made between them. As a consequence the brake lights 16 will be activated whenever the vehicle is decelerating, whether the brakes are applied or not, thereby enabling the driver of a following vehicle to be made aware of the situation. If the vehicle ceases to decelerate, i.e. it stops, accelerates or resumes forward motion at constant speed, the mercury 22 will flow to the rear of the tube 21, the circuit between terminals 19 and 20 will be broken and the brake lights 16, in the absence of operation of the brake pedal 14, will be extinguished.

Referring now to Figs. 3 and 4 there is shown an alternative embodiment of speed reduction indicator 30. The indicator 30 is mounted in the vehicle and connected to switch contacts 17,18 as in the previous embodiment, battery 13, brake pedal 14, brake cylinder 15 and brake lights 16 being provided as in the previous case. Indicator 30 comprises a body 31 through which terminals 32,33 extend at opposed ends thereof. Connected to one terminal,33, is a resiliently flexible strip 34 which in its undeformed condition as shown in Fig. 3 extends inclined relative to the body 31 above and out of contact with the other terminal 32. Located on top of the strip 34 is a roller 35 which, when the vehicle is stationary, moving at constant speed or accelerating, rests at the lower end of strip 34 adjacent terminal 33, as shown in Fig. 3. However, when the vehicle is decelerating the inertia force on the roller 35 causes it to move forwardly, its weight bending the strip 34, and causing the strip 34 to come into contact with the terminal 32. In this way the electrical circuit is closed, causing operation of

the brake lights 16, as shown in Fig. 4. When the vehicle stops, resumes forward motion at constant speed or accelerates, the roller 35 will roll back to the position shown in Fig. 3, the strip 34 will return to its undeformed condition and the electrical circuit between terminals 32,33 will be broken, thereby causing the brake lights 16 to be extinguished.

Referring now to Figs. 4 and 5 there is shown a speed reduction indicator 40 which is again mounted in a vehicle and connected as the previous embodiments. In this case the indicator 40 comprises a body 41 through which terminals 42,43 extend at opposed ends thereof. Mounted in the body 41 so as to be pivotal relative thereto about a pivot axis 44 which extends transversely of the vehicle, is an elongate member or beam 45 whose centre of mass 46 is located rearwardly and upwardly of the pivot axis 44. When the vehicle is stationary, moving at constant speed or accelerating, the weight of the beam 45 ensures that it adopts the inclined position shown in Fig. 5, out of contact with both terminals 42,43. However if the vehicle decelerates the inertia force on the beam 45 will cause the beam to pivot into the position shown in Fig. 6 in which it contacts both terminals 42,43, thereby making the electrical circuit and activating the brake lights 16. When the vehicle stops decelerating the beam 45 will pivot back to the position shown in Fig. 5 and the brake lights 16 will be extinguished.

By means of the invention the driver of a following vehicle may be made aware of the slowing down of a preceding vehicle, whether the brakes of the preceding vehicle are applied or not. In consequence many "shunt" accidents may be avoided.

Alternative embodiments may be readily apparent to persons skilled in the art. For example, the conventional brake light system may be provided on a completely separate circuit from that including the speed reduction indicator of the present invention, thereby providing that one system will remain operative should a fault develop in the other system. As an alternative to the pivotal system of Figs. 5 and 6 a spring loaded mass may be provided, the inertia force on the mass under deceleration of the vehicle causing a change in length of the spring so that the mass moves to come into contact with the previously uncontacted terminal. Instead of a mechanical spring a pneumatic or hydraulic spring may be used with such an embodiment.

## Claims

1. A speed reduction indicator for a vehicle comprising a pair of electrical terminals, said terminals being spaced apart and connected one to a source of electrical power and the other to an indicating means, and contact means freely movable between a non-operating position in which at least one of said terminals is not in contact with said contact means, and an operating position in which said contact means is in contact with both of said terminals.

2. A speed reduction indicator according to claim 1 comprising a hollow body, said terminals being disposed at opposed ends of said body.

3. A speed reduction indicator according to claim 2 wherein said body contains mercury.

4. A speed reduction indicator according to claim 3 wherein said body is mounted in a vehicle so as to be inclined upwardly towards the front of said vehicle.

5. A speed reduction indicator according to claim 2, wherein a resiliently flexible strip is mounted in said body, having one end thereof connected with one of said terminals and having a free end, and a roller constrained to roll along said strip whereby the weight of said roller when located adjacent said free end causes said strip to bend into contact with the other of said terminals.

6. A speed reduction indicator according to claim 5, wherein said body is mounted in a vehicle with said strip inclined upwardly towards the front of said vehicle.

7. A speed reduction indicator according to claim 2, wherein said contact means comprises an elongate member pivotally mounted in said body, said terminals being disposed on opposed sides of the pivot axis of said member and said member having a centre of mass spaced from said pivot axis to one of said sides thereof.

8. A speed reduction indicator according to claim 7, wherein said body is mounted in a vehicle with said pivot axis extending laterally thereof, said terminals being disposed forwardly and rearwardly of said pivot axis, and said centre of mass being located rearwardly and upwardly of said pivot axis.

9. A speed reduction indicator according to claim 1, wherein said contact means is connected to one of said terminals and spring means is provided operable to resist movement of said contact means into contact with the other of said terminals.

10. A speed reduction indicator according to claim 9, wherein said spring means comprises pneumatic or hydraulic spring means,

11. A speed reduction indicator according to any one of claims 1 to 10, wherein said indicating means comprises at least one lamp.

12. A speed reduction indicator according to any one of claims 1 to 11, wherein said terminals are connected to switch contacts of a brake-means operated switching device.

**FIG.1**

**FIG.2**

FIG.3

FIG.4

FIG.5

FIG.6